# EUROPEAN PATENT APPLICATION

(11) **EP 0 554 116 A2**
(43) Date of publication of application: **04.08.1993**
(21) Application number: 93300683.5
(22) Date of filing: 29.01.1993
(51) Int. Cl.: H04N 3/15, H04N 5/335

(54) **Method and system for enhancing resolution of an image**

(30) Priority: 30.01.1992 US 828379
(71) Applicant: TEXAS INSTRUMENTS INCORPORATED, Dallas Texas 75265 (US)
(72) Inventor: Maunder, James R., Carrollton, TX 75007 (US)
(74) Representative: Blanco White, Henry Nicholas

(57) **Abstract**

System (10) is an electro-optical system for effectively combining the pixels of two CCD arrays (32, 34) for enhanced resolution. Original image (22) is generated from an object (12) and then split into two complete images (24) and (26) by image multiplier (14). First CCD array (32) in first camera (16) receives image (24) and second CCD array (34) in second camera (18) receives image (26). CCD arrays (32) and (34) are respectively optically aligned with image multiplier (14) such that the image (24) received on CCD array (32) is offset one half pixel in the x dimension and the y dimension relative to the position of image (26) on CCD array (34). Camera (16) generates a first data set and camera (18) generates a second data set. The first and second data sets are meshed in a CPU, effectively creating a quadrupling of the number of pixels for the total system. In an alternative embodiment, two CCD arrays (32, 34) are housed in one camera and optically offset to achieve the same effect.

## Description

### CROSS-REFERENCE TO RELATED APPLICATIONS

The following coassigned patent application is hereby incorporated by reference herein:
Serial No. 703,225, filing date May 20, 1991, Attorney Docket No. TI-15429.

### BACKGROUND OF INVENTION

### FIELD OF THE INVENTION

This invention relates to image resolution enhancement. More particularly, it relates to an electro-optical system using two or more lower resolution pixel arrays to achieve the resolution and accuracy of a more costly high resolution pixel array.

### DESCRIPTION OF THE PRIOR ART

Image resolution is a driving parameter in many applications. For example, improving resolution and accuracy for inspecting the leads on surface mounted devices is very important. To measure the position or location of an edge, a CCD (charged coupled device) camera is used with either front or back lighting. Depending on the accuracy desired and the sharpness of the edge, the edge can be identified with a particular pixel, set of pixels, or gray level analysis can be used. In order to control costs, a 512 X 512 pixel array (or various pixel array densities) camera can be used. The problem occurs when this type of camera does not provide the accuracy required. One of the most obvious ways to improve accuracy is to improve the number of pixels per inch of the object under inspection. This can be accomplished in many different ways. These include magnifying the object being inspected, using multiple cameras to maintain field of view, scanning, splitting the image into multiple parts, or using a higher resolution camera. Each of these methods has drawbacks.

The desired accuracy may be achievable by increasing the magnification on the CCD. This is one of the least costly methods. The problem occurs when the field of view must be maintained. Increasing the magnification by two (2x), substantially decreases the field of view.

One way to both increase the magnification and the field of view, is to use multiple cameras to look at the necessary field of view. This could even be more attractive than using a single higher resolution camera due to the excessive cost of such a camera. The problem with using multiple cameras in this fashion is that the image is now broken into two or more images and must be rejoined mathematically during image processing. This results in a tolerance stackup at the image intersections.

Another way to both magnify the image and maintain field of view is to scan the object. This is an acceptable solution if significant increases in imaging and processing time are acceptable. There are several problems with this approach, however. This approach requires high-precision moving parts to move either the object being imaged or the camera. A significant drawback is the additional time required to scan the object, take multiple pictures and process the images mathematically back into a single image. This can be many times the amount of time required to take a single picture.

One other way both to magnify the image and get the desired field of view is only applicable in certain applications. A typical CCD is generally square. If the object being imaged is more rectangular, then it may be possible to split its image and project the two or more partial images of the object on the same CCD. This approach however does not result in the 2X or more improvement in accuracy that might be expected. The same type of error described with using multiple cameras occurs when trying to put the two halves together in image processing. The result is a tolerance stackup where the two halves of the image are joined in image processing.

The simplest way to increase accuracy and maintain the field of view in a single image is to use a higher resolution camera. If this provides the necessary accuracy and cost is not a factor, then this may be the best approach. The problem is cost. A single 512 X 512 CCD camera costs in the range of $1200. A single 1024 X 1024 CCD camera costs about $10,000, eight times the cost of a 512 X 512 camera. A 2048 X 2048 CCD camera costs around $30,000 or more. Thus a greater resolution camera incurs prohibitive cost for many applications.

### SUMMARY OF THE INVENTION

The problems outlined above are in large measure solved by the method and apparatus in accordance with the present invention. That is to say, the present invention provides a method and system which gain twice (or more) the resolution of a conventional single camera system without losing the field of view and without sustaining the cost of a higher resolution camera.

The present invention uses either back lighting, front lighting, or natural lighting, whichever provides the appropriate lighting necessary for a camera to see an object in a given application. An image of the object is split into two or more complete images. Each image is then received by its own detector, for example a CCD camera. At setup each detector is positioned such that the first image's position on the pixels of one detector is offset by some fraction of a pixel from where the second image's position on the pixels of the other detector is located. For example, if two 512 X 512 cameras are utilized, they can be offset relative to the image by some fraction of a pixel (e.g. one half) in both the x and y axes. If three cameras are used, each can be offset from the last by some fraction of a pixel (e.g. one third) in both the x and the y axes. If four cameras are used, each camera can be offset from the last, for example, by one fourth pixel, and so on.

Two 512 X 512 cameras using this technique are roughly equivalent to a 1024 X 1024 camera, but at a greatly reduced cost (i.e. about $2,400 versus about $10,000). It should also be noted that higher resolution cameras can be used to emulate even higher resolution cameras (e.g. two 1024 X 1024 cameras can be used to emulate a 2048 X 2048 camera, etc.).

If a sharp edge is being detected on a specific pixel, then the accuracy is directly related to the number of pixels/unit of distance. In a two camera system the edge locations determined by each camera can be averaged to attain an accuracy of almost twice that of a single camera system.

If a gray level analysis is being used to detect the edge, then the light intensity points for each pixel and each camera can be combined for one single gray level analysis. The points for each camera can be adjusted to remove the bias between the cameras. If two cameras are used in this configuration with gray level analysis, then a greater than 50% improvement of accuracy is achieved over using a single camera image.

The invention provides a method for enhanced resolution, the method comprising the steps of: generating at least a first image and a second image of an object; detecting the first and second images; representing the first and second detected images as respective first and second data sets; and meshing the first and second data sets.

### BRIEF DESCRIPTION OF THE DRAWINGS

Fig. 1 is a schematic representation of an enhanced resolution electro-optical system in accordance with the invention;
Fig. 2 is a schematic representation of an alternative-embodiment enhanced resolution electro-optical system in accordance with the invention;
Figs. 3A and 3B depict image multipliers for the alternative embodiment of Fig. 2;
Fig. 4 depicts binary data analysis in one dimension in accordance with the present invention;
Fig. 5 depicts the meshing of two data sets illustrating pixel array offset;
Fig. 6 depicts gray level analysis techniques in one dimension in accordance with the present invention;
Fig. 7 is a block diagram showing the system of Fig. 1 in more detail;
Fig. 8 is a block diagram showing the system of Fig. 2 in more detail;
Fig. 9 is a first CCD array with a first image thereon; and
Fig. 10 is a second CCD array with a second image thereon.

### DETAILED DESCRIPTION OF THE PREFERRED EMBODIMENT

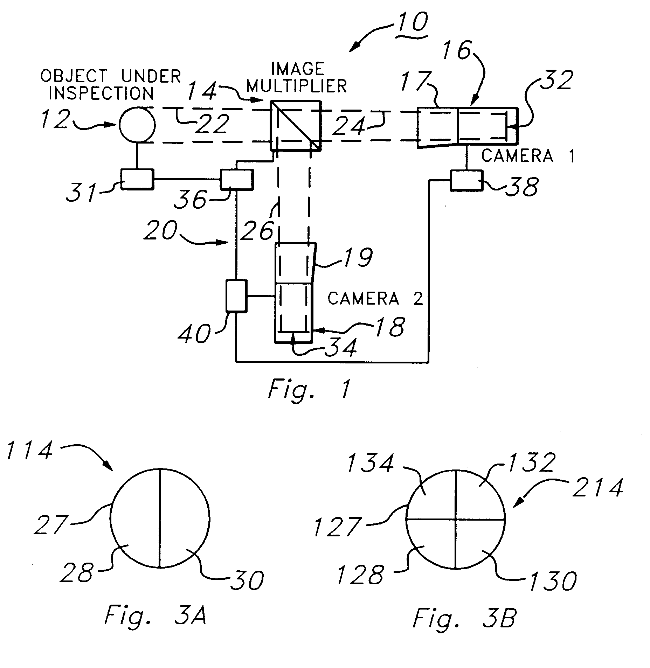

Referring now to the drawings in general and Fig. 1 in particular, enhanced resolution electro-optical system 10 is shown in conjunction with an object 12 under inspection. System 10 has a lens assembly or image multiplier (e.g. a conventional beam splitter) 14, a first camera 16, a first primary lens 17, a second camera 18, a second primary lens 19 and a base or table assembly 20.

Image multiplier 14 receives an original image 22 of object 12 and generates therefrom two entire images, namely first image 24 and second image 26.

The preferred embodiment of system 10 is designed to be used with a surface mounted device such as object 12. In particular, the leads of the surface mounted device are the structure of interest. Above-referenced pending U.S. Patent application, Serial No. 703,225, filing date May 20, 1991, discusses such devices in more detail. It should be noted however, that system 10 can easily be adapted for inspection or observation of other types of objects other than surface mounted devices. System 10 can be used, for example, for object recognition or high-speed edge inspection.

First camera 16 in the preferred embodiment is a CCD camera including a first image detector or 512 X 512 CCD pixel array 32. First camera 16 is optically aligned with image multiplier 14 and first primary lens 17 such that first CCD array 32 optically detects image 24. Other detectors or sensors of various pixel densities could be used rather than a CCD array, for example a CID (charged inductive device) array or focal plane array could be used. Indeed, any electronic camera suitable to the application could be used.

Still referring to Fig. 1, second camera 18 in the preferred embodiment is a CCD camera including a second image detector or 512 X 512 CCD pixel array 34. Second camera 18 is optically aligned with image multiplier 14 and second primary lens 19 such that second CCD array 34 optically detects image 26. As stated above, other optical detectors or pixel densities could be used.

First camera 16 and second camera 18 are electronically coupled to mesh respective pixel data through image processing. It will be readily appreciated that software, hardware or any combination thereof can be utilized to accomplish the image processing.

Table assembly 20 includes a seat 31 as well as image multiplier table 36, first camera table 38 and second camera table 40, all of which are precisely mechanically coupled to achieve the optical alignment and coupling (between object 12, image multiplier 14, first camera 16, first primary lens 17, second camera 18 and second primary lens 19) discussed herein.

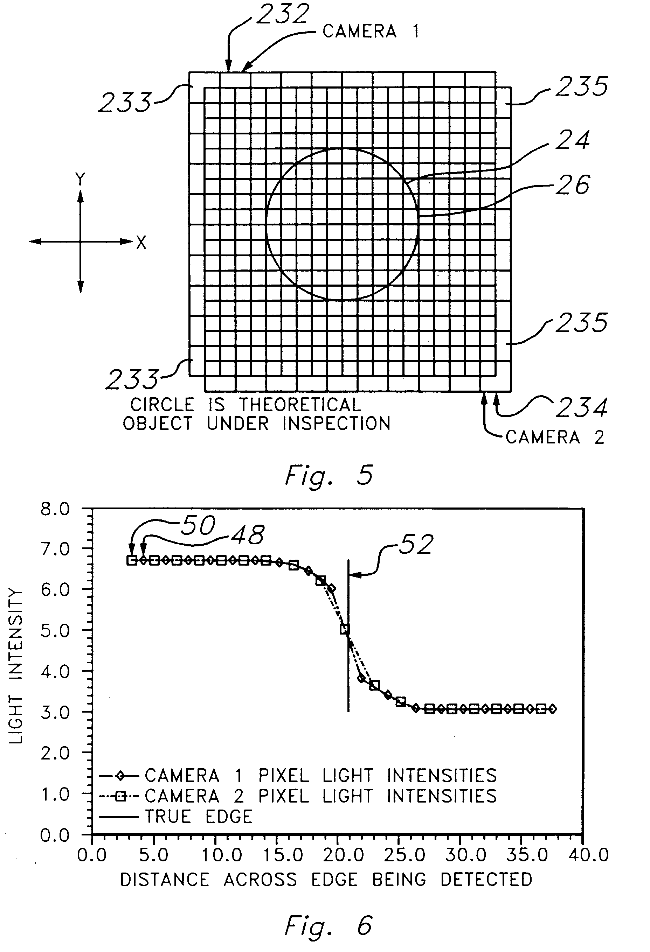

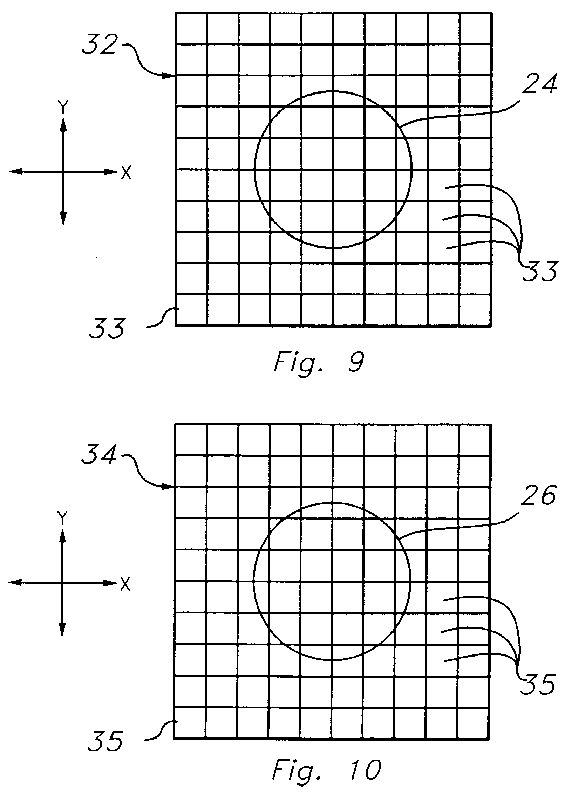

Referring to Fig. 5, camera 16 generates a first data set 232, which is a data representation of the optical intensities (either digital or analog) of pixels 33 of CCD array 32 (see Fig. 9). First data set 232 is made up of pixel representations 233, with each such pixel representation 233 corresponding to a pixel 33 in CCD array 32. Camera 18 generates a second data set 234, which is a data representation of the optical intensities (either digital or analog) of the pixels 35 of CCD array 34 (see Fig. 10). Second data set 234 is made up of pixel representations 235, with each such pixel representation 235 corresponding to a pixel 35 in CCD array 34.

While in reality first data set 232 and second data set 234 are embodied as optical intensity information, Fig. 5 is a graphical representation of first data set 232 and second data set 234 much as they would appear if reprocessed as a visual image. It will be noted that Figs. 9 and 10 portray 10 X 10 arrays of pixels 33 and 35 respectively for ease of illustration only. Actually, CCD arrays 32 and 34 are 512 X 512 arrays of pixels 33 and 35 respectively.

Fig. 5 shows first data set 232 graphically meshed with second data set 234. It will be readily appreciated that the actual process of meshing first data set 232 and second data set 234 occurs mathematically in CPU 60. In other words, first data set 232, after being generated in camera 16, is transmitted to CPU 60 and likewise second data set 234, after being generated in camera 18, is transmitted to CPU 60 and then first data set 232 and second data set 234 are meshed.

Still referring to Fig. 5, first image 24 and second image 26 are also shown superimposed on one another. For ease of illustration, first image 24 and second image 26 are represented as superimposed circles rather than as the actual images of object 12. It will be noted that images 24, 26 are substantially perfectly aligned while first data set 232 is offset substantially one half pixel representation 233 in the x dimension and substantially one half pixel representation 233 in the y dimension compared to second data set 234. The x and y axes are indicated to the left. This is a representation of the slight offset (i.e. substantially one half pixel in each dimension) in optical coupling between image multiplier 14 and first CCD array 32 as opposed to the optical coupling between image multiplier 14 and CCD array 34 in accordance with the present invention.

Referring to Fig. 1, each camera, at setup, is positioned such that the position of image 24 on CCD array 32 of first camera 16 is offset by substantially half a pixel relative to the position of image 26 on CCD array 34 of second camera 18. In this fashion, the effective number of pixel representations for resolution purposes is quadrupled, when pixel representations 233 from first data set 232 and pixel representations 235 from second data set 234 are meshed in accordance with the invention.

The fraction of a pixel representation 233 (offset in one dimension relative to pixel representation 235) is one half as shown in Fig. 5 but it need not be. Indeed any fraction of a pixel representation could be used for the offset and indeed there need not be any offset at all so that the images 24, 26 received by the two CCD arrays 32, 34 could be at the same relative positions on data sets 232, 234. However, in the preferred embodiment some offset is applied and in particular with the use of two CCD arrays, one half a pixel offset in each dimension is applied. This provides the best resolution for a two-camera system. In a similar fashion, if image multiplier 14 were utilized for generating four complete images to four CCD arrays, each CCD array could be offset one fourth pixel with respect to each preceding CCD array. In certain applications, particularly when the primary edge of an object is orthogonal to either of the x or y axis of the array, it may be beneficial to offset the pixel arrays only in x or only in y, respectively.

Fig. 9 shows first CCD array 32 with first image 24 superimposed thereon and represented as a circle. Fig. 10 shows second CCD array 34 with second image 26 superimposed thereon and represented as a circle. Note that the position of image 24 on CCD array 32 is one half pixel offset (in x and y) with respect to the position of image 26 on CCD array 34, in accordance with the present invention.

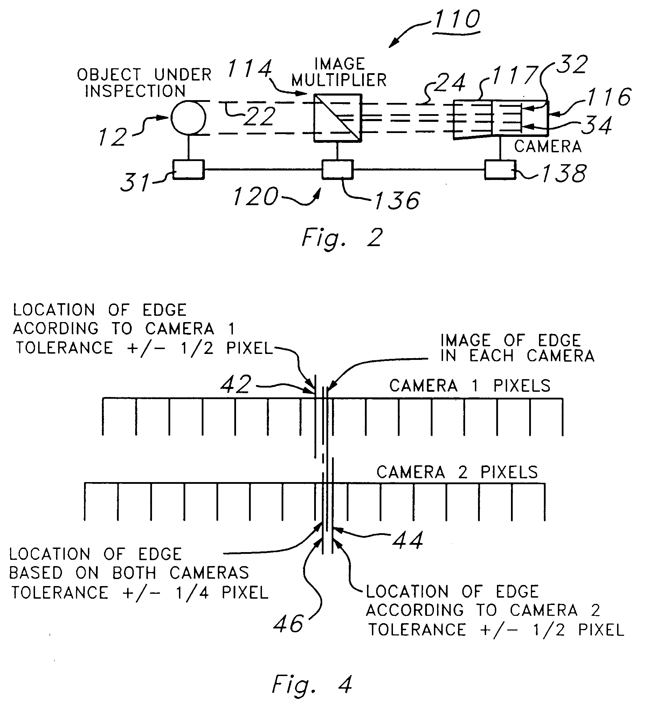

Referring to Fig. 4, a single axis (in this example, x axis) data representation of CCD arrays 32 and 34 is created for the respective detected edges of images 24 and 26. The data are meshed so that the effective number of pixels along the row is doubled. Reference numeral 42 shows the edge detection by first camera 16 using binary edge detection analysis. Reference numeral 44 shows the edge detection by second camera 18 using binary edge detection analysis. Likewise, reference numeral 46 indicates the edge detection by the meshing (by averaging) of data from CCD array 32 and CCD array 34. Thus, enhanced accuracy, resulting from increased resolution of system 10 is achieved.

Referring to Fig. 6, a one dimensional "gray edge" analysis is shown. In particular, pixel light intensities of first camera 16 are indicated by the diamonds 48 and pixel light intensities of second camera 18 are indicated by the squares 50 such that the true edge is shown to be detected by the line indicated at reference numeral 52. When gray level analysis edge detection is used, subpixel resolutions can be attained. With a single CCD array system of the prior art, depending on the quality of the hardware and the gray level analysis algorithms, subpixel resolutions of about 1/10 of a pixel can be attained.

Figure 6 is a simplified illustration of the theory of operation of the preferred embodiment. This is an example of utilizing one row of pixels to locate a single edge orthogonal to the row of pixels. For a single camera system, the curve generated by the gray level edge detection analysis could be made up of, for example, fifteen points (i.e. diamonds 48), depending on the sharpness of the edge. The accuracy with which the edge is located is only as good as the curve fitted to the fifteen points. By adding a second CCD array, fifteen more points are added that will provide a total of thirty points with which to fit the curve. If these extra fifteen points are halfway between each pair of the first fifteen, the actual shape of the curve will be better defined providing better accuracy. This should provide an enhanced resolution equal to between 1/20 and 1/15 of a pixel. It will be appreciated that a calibration performed earlier will allow the edge to be located on the curve more accurately.

In the preferred embodiment, the edge detection analysis is conducted in two dimensions simultaneously since the second data set 232 is offset in both the x and y axis. Even if the second data set 232 were not offset, there would be some improvement in accuracy, because the error produced by one pixel representation of one data set would be averaged with the corresponding pixel representation on the other data set, thus averaging down the error.

Referring to Fig. 2, an alternative enhanced resolution electro-optical system 110 is depicted with one camera 116. Image multiplier 114 generates two images 24,26 focused on camera 116. Camera 116 has a first CCD array 32 and second CCD array 34 which are optically coupled with image multiplier 114 and a primary lens 117. System 110 includes a base or table assembly 120 similar to table assembly 20 of system 10.

Referring to Fig. 3A, relevant portions of image multiplier 114 are shown in more detail. In particular, image multiplier 114 includes a double imaging lens 27 having a first lens portion 28 and a second lens portion 30. For a more detailed discussion of the method of the generation of images 24 and 26 in the context of image multiplier 114, refer to pending U.S. Patent application Serial No. 703,225, filing date May 20, 1991, previously incorporated by reference. The reader's attention is particularly directed to a comparison of Figs. 3A-3C and 4, along with relevant text of the above-referenced patent application.

Image multiplier 114 receives original image 22 and then portion 28 generates first image 24 and portion 30 generates second image 26. Image multiplier 114 is optically aligned with seat 31 (see Fig. 1) of table assembly 20 and object 12 to effectively multiply original image 22 into the two complete images 24, 26. Portions 28 and 30 are custom designed to project images 24, 26 as desired.

Fig. 3B depicts relevant portions of image multiplier 214 which is suitable for generating four complete images from an original image. In particular, image multiplier 214 includes a quadruple imaging lens 127 having a first lens portion 128, a second lens portion 130, a third lens portion 132 and a fourth lens portion 134. The four complete images would be respectively generated by portions 128, 130, 132, and 134. Image multiplier 214 of Fig. 3B is shown to illustrate that any reasonable number of images can be generated in applying the present invention, with a corresponding detector for each image generated.

Table assembly 120 of system 110 includes a seat 31, IM table 136 and camera table 138. While mechanical precision for optical coupling is still required, there are obviously less mechanical parameters since there is only one camera 116 in system 110.

The advantage of system 110 is that there are less mechanical parameters as discussed above. The disadvantage is the lack of commercial availability of such a camera 116. That is to say, camera 116 must be custom designed and made, whereas in system 10, cameras 16 and 18 are readily commercially available.

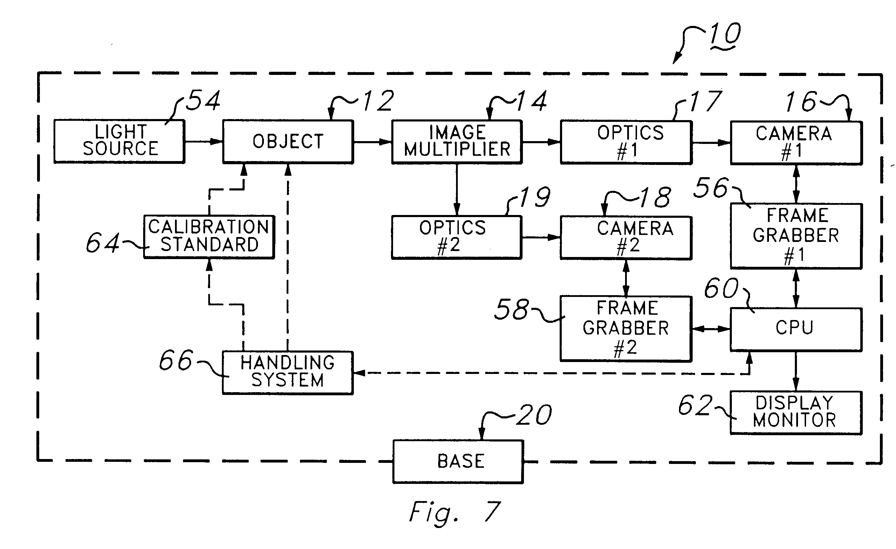

Referring now to Fig. 7, system 10 is shown schematically with more elements shown than in Fig. 1. In particular, light source 54 is shown behind object 12 and frame grabbers 56, 58, CPU 60, display monitor 62 are also shown. Additionally, a calibration standard 64 is provided for calibration and a handling system 66 is provided for processing of a series of objects 12.

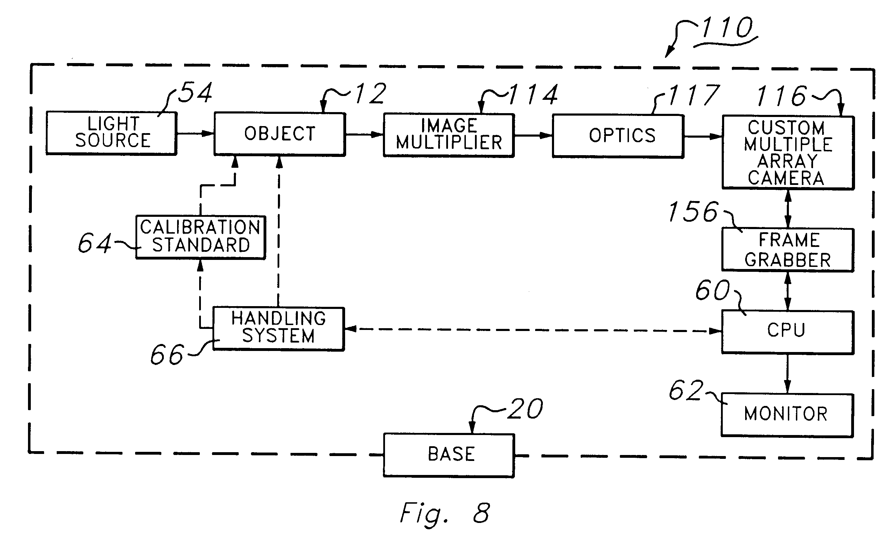

Referring to Fig. 8, additional detail is shown for system 110 with respect to Fig. 2. Once again a light source 54 is added as well as frame grabber 156, CPU 60, monitor 62 and calibration standard 64 and handling system 66. Framegrabber 156 is coupled with customized camera 116 so as to receive data from arrays 32, 34 (not shown), but it will be readily understood that should more than two arrays be disposed within camera 116, framegrabber 156 is designed to accommodate input from the particular number of arrays therein.

The operation of system 10 will now be discussed generally. It will readily be appreciated by persons skilled in the art that the following discussion also applies to system 110. System 10 is the system treated simply for ease of discussion.

In the use of system 10 a calibration is first performed with calibration standard 64, such as a calibration block. The calibration may be done with either a calibration block or an optical target of precisely known dimensions. Calibration standard 64 may or may not be similar to the object 12 under inspection, depending on the application. During calibration, biases between the pixels of the various CCD arrays is adjusted for, as well as any distortions in the optical system.

Light source 54 (Fig. 7) is applied from the front or behind as desired. Once system 10 is calibrated, a series of objects 12 is then inspected sequentially. Image multiplier 14 splits original image 22 into two complete images 24, 26 respectively detected by CCD arrays 32 and 34. Data sets 232, 234 are respectively generated from CCD arrays 32,34. Data sets 232, 234 are then meshed in CPU 60. An analysis is then performed, if necessary, to determine the relevant edge of object 12 or other image characteristics of interest. The inspection system can, optionally, only collect raw data with data processing taking place at another CPU. Alternatively, the system can be designed to collect, process and analyze the data. The inspection system 10 can operate with an operator, or it can electronically send pass/fail criteria to other locations (e.g. handling system 66). The raw or processed data can also be exported via monitor, printer, recording media, or wire to other CPUs where the data can be accumulated and/or further processed.

The data representation may also be processed into a visual representation for purposes of a visual display (e.g. the operator might observe the visual display of monitor 62 in utilizing system 10).

The appropriate action is then taken based on the data representation or visual display. For example, object 12 may pass inspection or be rejected, either by an operator or by an automated equipment coupled with system 10. In this fashion the inspection (or other observation) of object 12 is performed with the enhanced resolution of system 10 wherein two (or more) CCD arrays (or other detectors) having a smaller number of pixels are effectively combined rather than using a much more expensive, high resolution camera with a greater number of pixels.

Although the invention has been described in detail herein with reference to its preferred embodiment and certain described alternatives, it is to be understood that this description is by way of example only, and is not to be construed in a limiting sense. It is to be further understood that numerous changes in the details of the embodiments of the invention, and additional embodiments of the invention, will be apparent to, and may be made by, persons of ordinary skill in the art having reference to this description. It is contemplated that all such changes and additional embodiments are within the spirit and true scope of the invention as claimed below.

## Claims

1. A method of enhancing resolution of an image, the method comprising the steps of:
(a) generating at least a first image and a second image of the object;
(b) detecting the first and second images;
(c) representing the first and second detected images as respective first and second data sets; and
(d) meshing the first and second data sets.

2. The method of Claim 1 wherein at step (c), first and second detectors are utilized, the first and second detectors respectively forming first and second two-dimensional lattices.

3. The method of Claim 2 wherein the first and second detectors respectively include arrays of pixels and at least some pixels in each detector are substantially disposed a preselected fixed length from adjacent pixels.

4. The method of Claim 3 wherein the first image is detected relative to the second image such that the first and second data arrays of pixels are offset a fraction of the fixed length.

5. The method of Claim 4 wherein the fraction of the fixed length is about one half.

6. The method of Claim 1 wherein the first and second data sets respectively include arrays of pixel representations having optical intensities corresponding to the pixels of the first and second detectors and wherein the object presents an edge such that the optical intensity of each pixel of the meshed first and second data sets is analyzed using binary edge detection analysis, to determine the edge of the object.

7. The method of Claim 6 wherein the optical intensity of each pixel representation of the meshed first and second data sets is analyzed using gray level analysis, to determine the edge of the object.

8. The method of Claim 1 wherein a reprocessed image is generated from the meshed first and second data sets.

9. The method of Claim 1 wherein the object provided is a calibration standard of known dimension or shape.

10. A system for detecting and enhancing resolution of an object suitable for presenting an image, the system comprising:
a lens assembly;
a first image detector and a second image detector, the first and second detectors respectively configured to present first and second arrays of pixels; and
structure for generating first and second data sets corresponding respectively to the first and second arrays of pixels and for meshing the first and second data sets.

11. The system of Claim 10 wherein the first and second image detectors respectively include a first CCD array and a second CCD array.

12. The system of Claim 11 wherein the system includes a camera, the camera including the first and second CCD arrays.

13. The system of Claim 10 wherein the lens assembly includes an optical image multiplier for generating two complete images of the object.

14. The system of Claim 11 wherein the system includes a first camera and a second camera, the first camera including the first CCD array, the second camera including the second CCD array.

15. The system of Claim 14 wherein the first and second CCD arrays both include a 512 X 512 pixel array.

16. The system of Claim 13 further including a seat for the object, the seat operatively associated with the image multiplier.

17. The system of Claim 16 wherein at least some pixels in each array are substantially disposed a preselected fixed length from adjacent pixels and wherein the image multiplier is operatively associated with the first and second detectors such that when an image of the object is converted into a first complete image and a second complete image, the first image is detected relative to the second image such that the first and second arrays of pixels are offset a fraction of the fixed length.

18. The system of Claim 17 wherein the fraction of the fixed length is about one half.

19. The system of Claim 10 further including structure operatively associated with the first and second data sets for generating a processed image.

20. The system of Claim 19 further including structure operatively associated with the first and second data sets for generating a visual display of the processed image.

21. An electronic camera comprising:
a camera lens;
a first image detector optically associated with the camera lens; and
a second image detector optically associated with the camera lens and the first image detector, the first and second detectors respectively configured to present first and second arrays of pixels.

22. The electronic camera of Claim 21 wherein the first and second detectors respectively include a first CCD array and a second CCD array.
